# FASCICULE DE BREVET EUROPEEN

(11) **EP 3 106 602 B1**
(45) Date de publication et mention de la délivrance du brevet: **22.08.2018**
(21) Numéro de dépôt: 16174727.4
(22) Date de dépôt: 16.06.2016
(51) Int. Cl.: E06B 9/15, A01G 9/22, E06B 9/58

(54) **SYSTÈME D'OMBRAGE D'UN ESPACE VITRÉ OU NON VITRÉ**
BESCHATTUNGSSYSTEM FÜR EINEN VERGLASTEN ODER NICHT VERGLASTEN RAUM
SYSTEM FOR SHADING A GLAZED OR NON-GLAZED SPACE

(30) Priorité: 19.06.2015 FR 1555646
(43) Date de publication de la demande: 21.12.2016
(73) Titulaire: La Serre aux Orchidées, 13012 Marseille (FR)
(72) Inventeur: FOURNIER, Jean-Marie, 13012 Marseille (FR)
(74) Mandataire: Boura, Olivier

(56) Documents cités:
- FR-A- 339 850
- FR-A1- 2 578 901
- FR-A1- 2 643 110

## Description

La présente invention concerne un système destiné à ombrager les espaces vitrés, tels que les vérandas ou les serres, ou d'un espace non vitré, telle une pergola, et un procédé d'installation d'un tel système.

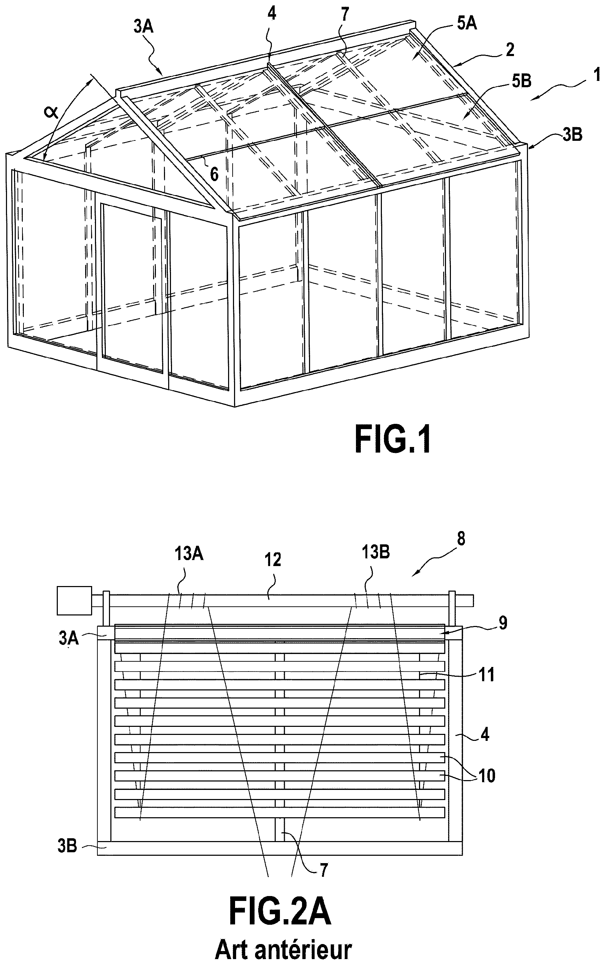

La figure 1 représente une vue en perspective d'un espace vitré 1 (ci-après une serre pour des raisons de simplicité) comprenant un toit 2 avec un sommet 3A et un bord inférieur 3B (ou rive) et divisé en plusieurs sections en verre soutenues par des poutres 4. Pour des raisons de dilatation thermique du verre, les sections 3 comportent généralement plusieurs panneaux de verre 5A, 5B qui se chevauchent légèrement par une marche 6. Un ou plusieurs chevrons 7 peuvent être disposés entre les poutres 4 afin d'aider à tenir les panneaux de verre 5A, 5B. En général, le toit 2 a une faible inclinaison α (alpha) par rapport au sol, par exemple 30°.

Selon l'utilisation de la serre, par exemple selon le genre de plantes qui y poussent, il peut être souhaité de n'exposer l'intérieur de la serre au soleil que pendant certaines heures de la journée, d'effectuer un ombrage partiel, de ne pas laisser la température à l'intérieur dépasser un certain seuil de température, etc.

Pour ces raisons, divers moyens de créer de l'ombre à l'intérieur d'une serre ont été mis en oeuvre au cours des années.

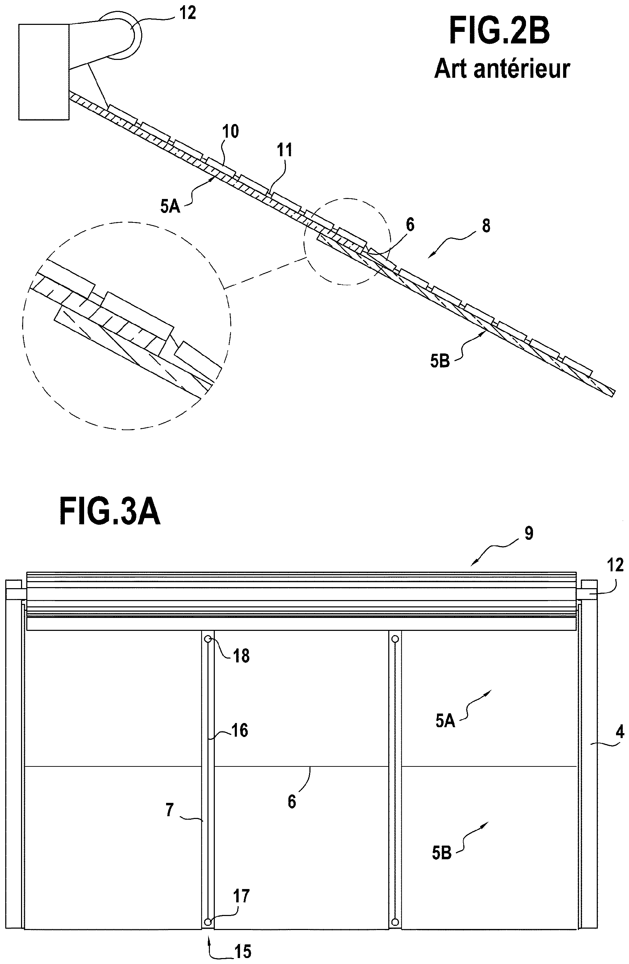

La figure 2A représente une vue de face d'un système d'ombrage 8 conventionnel pour le toit 2. Le système 8 comprend des stores 9, par exemple des claies en bois, avec des lattes 10 connectées entre elles par des tiges 11, et un arbre de rotation 12 monté sur le sommet du toit et connecté aux lattes 10 supérieures. Le système comprend en outre des cordes 13A, 13B enroulées autour de l'arbre de rotation 12 et ayant chacune une extrémité attachée en haut et sa seconde extrémité restant libre. Pour monter les stores, un utilisateur commence à enrouler les dernières lattes, puis tire sur les extrémités libres des cordes 13A, 13B pour enrouler complètement le store 9.

La faible inclinaison α du toit 2 rend la descente des stores plus difficile sous le simple effet de la pesanteur, même en attachant un poids aux dernières lattes. De plus, la grande surface des panneaux de verre crée un frottement qui peut empêcher les stores de descendre. En conséquence, pour descendre les stores, un râteau peut être employé pour attraper les stores enroulés et les tirer sur le bas, ce qui n'est pas pratique. En outre, la marche 6 peut gêner la montée des stores. Le brevet FR 339 850 A a pour objet un dispositif qui facilite la descente et la montée des claies sur un toit.

Le brevet GB 1,136,702 propose un moteur monté sur l'arbre de rotation pour le faire tourner dans les deux sens, pour monter et descendre les stores. Une poulie est fixée vers le bas du toit et une corde entoure la poulie, les dernières lattes et l'arbre de rotation, afin que la rotation de l'arbre dans l'autre sens tire les lattes vers le bas au moyen de la poulie.

Par contre, un tel système est compliqué à mettre en oeuvre et pas très esthétique car il faut ajouter des cordes et des poulies sur le toit.

Il peut être souhaitable de trouver un système pour faciliter la descente des stores au-delà du bord du toit et, de préférence, plus esthétique.

Des modes de réalisation de l'invention concernent un système d'ombrage configuré pour être monté sur le toit d'un espace vitré, tel une serre ou véranda, ou d'un espace non vitré, telle une pergola, le système comprenant un arbre de rotation configuré pour être disposé au sommet du toit, et un matériau d'ombrage qui peut être enroulé autour de l'arbre de rotation dans une position montée du système et déroulé sur le toit dans une position descendue du système, et au moins un moyen de glissement configuré pour être monté sur le toit afin que le matériau d'ombrage glisse sur le moyen de glissement lors de son déplacement entre les deux positions. Selon l'invention, le moyen de glissement comprend une pièce arrondie montée sur le bord inférieur du toit.

Dans un mode de réalisation, le moyen de glissement est un câble tendu entre le sommet du toit et le bord inférieur du toit.

Dans un mode de réalisation, le câble est fixé perpendiculaire à l'arbre de rotation et sur toute la largeur du toit.

Dans un mode de réalisation, le système comprend en outre un moyen de support monté entre le sommet du toit et le bord inférieur du toit afin de soutenir le câble.

Dans un mode de réalisation, l'arbre de rotation est couplé à un moteur qui le fait tourner dans les deux sens pour faire monter et descendre le matériau d'ombrage.

Dans un mode de réalisation, le moteur est contrôlé par un système de contrôle qui permet de contrôler au moins une de caractéristiques suivantes la programmation horaire de la descente et de la remontée du matériau, et le pourcentage de couverture du toit.

Dans un mode de réalisation, le moyen de glissement est fixé au-dessus d'un moyen de support du toit.

Des modes de réalisation concernent également un procédé d'installation d'un système d'ombrage selon l'invention sur le toit d'un espace vitré, tel une serre ou véranda, ou d'un espace non vitré, telle une pergola, le procédé comprenant les étapes de : monter le moyen de glissement sur le toit, fixer l'arbre de rotation sur le sommet du toit, et fixer un matériau d'ombrage à l'arbre de rotation.

Des modes de réalisation d'un système et d'une méthode selon l'invention seront exposés dans la description suivante, faite à titre non limitatif en relation avec les figures jointes parmi lesquelles :
- la figure 1 représente une vue en perspective d'une serre conventionnelle,
- les figures 2A, 2B représentent respectivement une vue de face et une vue de profil d'un système d'ombrage installé sur une serre conventionnelle,
- les figures 3A, 3B représentent respectivement une vue de face et une vue de profil d'un système d'ombrage selon un mode de réalisation,
- la figure 4 représente une vue de profil d'un système d'ombrage selon un autre mode de réalisation, et
- la figure 5 représente une vue en perspective d'une serre équipée d'un système d'ombrage selon un mode de réalisation.

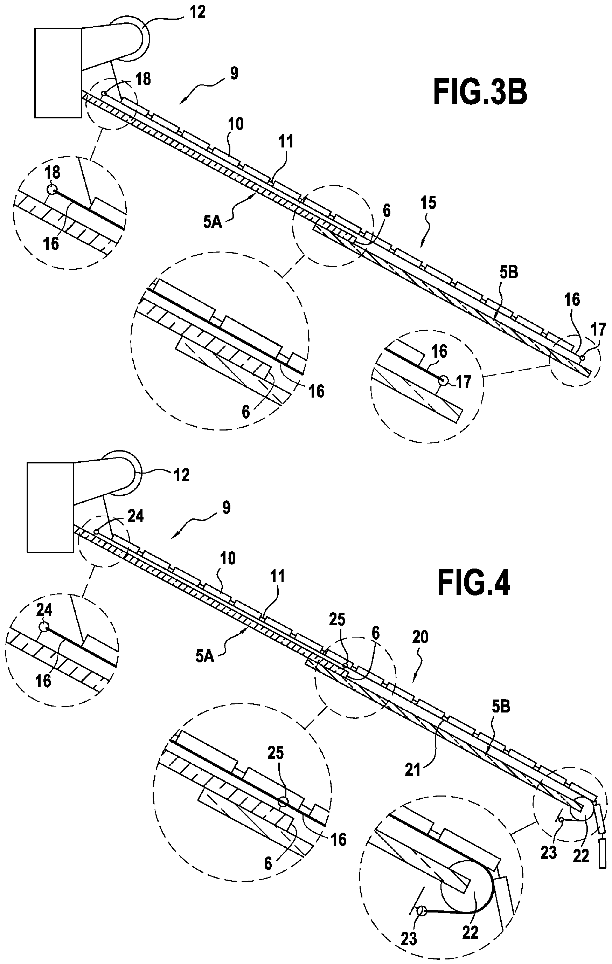

Les figures 3A, 3B représentent respectivement une vue de face et une vue de profil d'un système d'ombrage 15 selon un mode de réalisation, monté sur un toit 2 d'une serre 1 conventionnelle (non-montrées).

Le système d'ombrage selon l'invention est destiné à être monté sur le toit de tout type d'espace, qu'il soit vitré, comme par exemple une serre ou une véranda, ou non vitré, comme par exemple une pergola.

Le système d'ombrage 15 comprend les stores 9, un arbre de rotation 12 et au moins un moyen de glissement 16 (ci-après un câble pour des raisons de simplicité). Le câble 16 est monté sur le toit 2 perpendiculairement aux stores 9. Des moyens de fixation 17, 18 (par exemple, des croches) connectent le câble 16 respectivement au bord inférieur 3B du toit et au sommet 3A du toit, afin que le câble 16 soit tendu et survole la marche 6.

Les stores 9 glissent, pendant la montée et la descente, sur le ou les câbles qui présentent une faible surface de friction et empêchent une accroche des stores sur la marche 6. De préférence, les câbles 16 sont disposés au-dessus des chevrons 7, ce qui aide à les dissimuler. En conséquence, dans la position descendue, on ne voit que les stores.

La figure 4 représente une vue de profil d'un système d'ombrage 20 selon un autre mode de réalisation. Le système 20 comprend des stores 9, un arbre de rotation 12 et un moyen de glissement 21. Dans ce mode de réalisation, le système comprend en outre une pièce arrondie agencée sur le bord du toit, des moyens de fixation 23, 24 et un moyen de support 25.

Le moyen de fixation 23 de l'extrémité inferieure du câble 21 est fixé sous le toit, par exemple sur le côté inferieur du panneau 5B, ou sur le mur, et le câble 21 passe autour de la pièce arrondie 22. Ces deux éléments permettent aux stores 9 de descendre au-delà du bord du toit, ce qui peut être souhaité pour des raisons esthétiques ou créer de l'ombre sur les côtés latéraux de la serre.

Le moyen de fixation 24 de l'extrémité supérieure du câble 21 est agencé vers le sommet du toit. Enfin, le moyen de support, par exemple un pignon, est fixé entre les deux extrémités du câble 21, plus particulièrement à proximité de la marche 6 pour donner plus de support au câble 21.

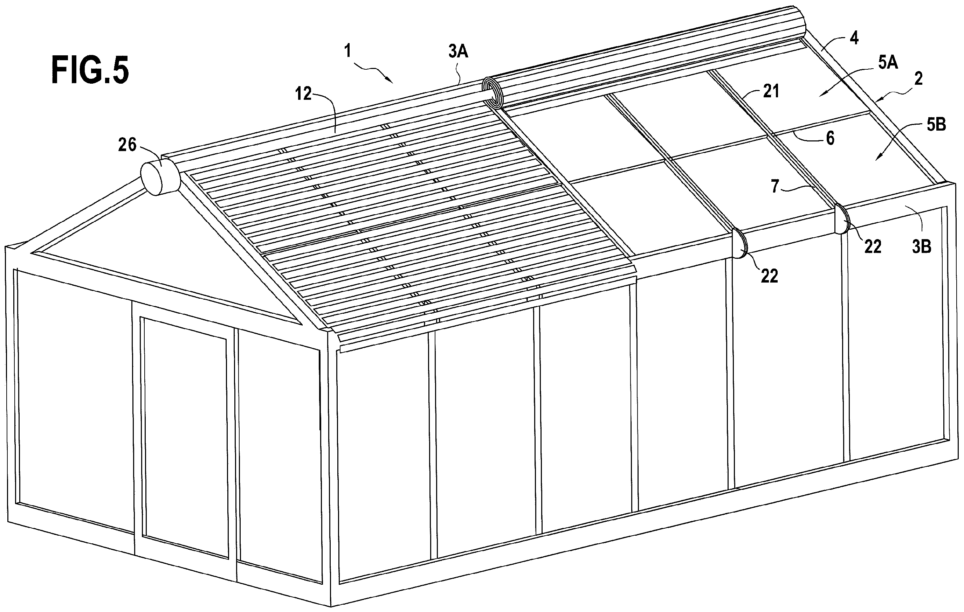

La figure 5 représente une vue en perspective d'une serre 1 selon un mode de réalisation, comprenant deux sections et deux systèmes d'ombrage, l'un montré en position descendue, l'autre en position montée. Un moteur 25 est couplé aux arbres de rotation 12 pour les faire tourner dans les deux sens. Le moteur 25 peut être commandé à distance, par exemple par une télécommande, ou connecté à un système de contrôle. En outre, les systèmes peuvent être commandés indépendamment l'un de l'autre ou simultanément. Le moteur 25 facilite la montée et la descente des stores et permet une programmation des horaires, le pourcentage de couverture (par exemple 25%, 50%, 75%, 100%) du toit de l'espace vitré ou non vitré, etc.

Des modes de réalisation concernent en outre un procédé d'installation d'un tel système d'ombrage sur un toit. Le procédé comprend les étapes de :
- monter le moyen de glissement (16, 21) sur le toit,
- fixer l'arbre de rotation (12) sur le sommet (3A) du toit, et
- fixer un matériau d'ombrage (9, 10) à l'arbre de rotation.

Néanmoins, ces étapes peuvent être accomplies dans un ordre diffèrent, par exemple fixer l'arbre de rotation sur le sommet du toit avant de monter le moyen de glissement, ou fixer le matériau d'ombrage à l'arbre de rotation avant de fixer l'arbre de rotation sur le sommet.

En outre, d'autres étapes peuvent être prévus, par exemple connecter l'arbre de rotation à un moteur, et connecter le moteur à un système de contrôle.

Il sera compris par l'homme du métier que l'invention décrite peut être mise en oeuvre différemment, avec différentes façons d'agencer les moyens de glissement, de contrôler la montée et la descente et/ou de traiter les informations, etc.

En outre, bien que des modes de l'invention aient été décrits en mettant en oeuvre des stores comprenant des lattes, l'invention est tout à fait applicable à d'autres moyens d'ombrage, par exemple une toile.

Alternativement, le moyen de glissement n'est pas un câble, mais un autre matériau avec un rebord fin, comme un rail, et de préférence longitudinal.

## Revendications

1. Système d'ombrage (15, 20) configuré pour être monté sur le toit (2) d'un espace vitré (1), tel une serre ou véranda, ou d'un espace non vitré, telle une pergola, le système comprenant :
un arbre de rotation (12) configuré pour être disposé au sommet (3A) du toit,
un matériau d'ombrage (9, 10) qui peut être enroulé autour de l'arbre de rotation dans une position montée du système et déroulé sur le toit dans une position descendue du système, et
au moins un moyen de glissement (16, 21) configuré pour être monté sur le toit afin que le matériau d'ombrage glisse sur le moyen de glissement lors de son déplacement entre les deux positions,
**caractérisé en ce que** le moyen de glissement comprend une pièce arrondie (22) montée sur le bord inférieur (3B) du toit (2).

2. Système selon la revendication 1, dans lequel le moyen de glissement (16, 21) est un câble tendu entre le sommet (3A) du toit et le bord inférieur (3B) du toit.

3. Système selon la revendication 2, dans lequel le câble est fixé perpendiculaire à l'arbre de rotation (12) et sur toute la largeur du toit.

4. Système selon l'une des revendications 2 ou 3, comprenant en outre un moyen de support (24) monté entre le sommet (3A) du toit et le bord inférieur (3B) du toit afin de soutenir le câble (16, 21).

5. Système selon l'une des revendications 1 à 4, dans lequel l'arbre de rotation (12) est couplé à un moteur (25) qui le fait tourner dans les deux sens pour faire monter et descendre le matériau d'ombrage.

6. Système selon la revendication 5, dans lequel le moteur (25) est contrôlé par un système de contrôle qui permet de contrôler au moins une de caractéristiques suivantes :
- la programmation horaire de la descente et de la remontée du matériau, et
- le pourcentage de couverture du toit.

7. Système selon l'une des revendications 1 à 6, dans lequel le moyen de glissement est fixé au-dessus d'un moyen de support (4, 7) du toit (2).

8. Procédé d'installation d'un système d'ombrage selon l'une des revendications 1 à 7 sur le toit (2) d'un espace vitré (1), tel une serre ou véranda, ou d'un espace non vitré, telle une pergola, le procédé comprenant les étapes de :
- monter le moyen de glissement (16, 21) comprenant un pièce arrondie (22) sur le toit,
- fixer l'arbre de rotation (12) sur le sommet (3A) du toit, et
- fixer un matériau d'ombrage (9, 10) à l'arbre de rotation.

## Patentansprüche

1. Beschattungssystem (15, 20), das eingerichtet ist, um auf dem Dach (2) eines verglasten Raums (1), wie beispielsweise einem Gewächshaus oder einem Wintergarten, oder einem nicht verglasten Raum, wie beispielsweise einer Pergola, angebracht zu werden, wobei das System umfasst:
eine Drehwelle (12), die derart eingerichtet ist, dass sie am Dachfirst (3A) angeordnet ist, ein Beschattungsmaterial (9, 10), das in einer hochgezogenen Position des Systems um die Drehwelle gewickelt sein kann und in einer abgesenkten Position des Systems auf dem Dach abgewickelt sein kann, und
mindestens eine Gleiteinrichtung (16, 21), die eingerichtet ist, um auf dem Dach angebracht zu werden, damit das Beschattungsmaterial auf der Gleiteinrichtung gleitet, wenn es zwischen den beiden Positionen bewegt wird,
**dadurch gekennzeichnet, dass** die Gleiteinrichtung ein abgerundetes Teil (22) umfasst, das am unteren Rand (3B) des Dachs (2) angebracht ist.

2. System gemäß Anspruch 1, wobei die Gleiteinrichtung (16, 21) ein zwischen dem Dachfirst (3A) und dem unteren Rand (3B) des Dachs gespanntes Kabel ist.

3. System gemäß Anspruch 2, wobei das Kabel senkrecht zur Drehwelle (12) und über die gesamte Breite des Dachs befestigt ist.

4. System gemäß einem der Ansprüche 2 oder 3, ferner umfassend eine Halteeinrichtung (24), die zwischen dem Dachfirst (3A) und dem unteren Rand (3B) des Dachs angebracht ist, um das Kabel (16, 21) zu halten.

5. System gemäß einem der Ansprüche 1 bis 4, wobei die Drehwelle (12) mit einem Motor (25) gekoppelt ist, der sie in beiden Richtungen dreht, um das Beschattungsmaterial hochzuziehen und abzusenken.

6. System gemäß Anspruch 5, wobei der Motor (25) durch ein Steuersystem gesteuert wird, das es ermöglicht, mindestens eine der folgenden Eigenschaften zu steuern:
- die Zeitsteuerung des Hochziehens und des Absenkens des Materials und
- die prozentuale Dachabdeckung.

7. System gemäß einem der Ansprüche 1 bis 6, wobei die Gleiteinrichtung über einer Halteeinrichtung (4, 7) des Dachs (2) befestigt ist.

8. Verfahren zum Installieren eines Beschattungssystems gemäß einem der Ansprüche 1 bis 7 auf dem Dach (2) eines verglasten Raums (1), wie beispielsweise eines Gewächshauses oder eines Wintergartens, oder eines nicht verglasten Raums, wie beispielsweise einer Pergola, wobei das Verfahren die Schritte umfasst:
- Anbringen der Gleiteinrichtung (16, 21), die ein abgerundetes Teil (22) umfasst, auf dem Dach,
- Befestigen der Drehwelle (12) am Dachfirst (3A) und
- Befestigen eines Beschattungsmaterials (9, 10) an der Drehwelle.

## Claims

1. A shading system (15, 20) configured to be mounted on the roof (2) of a glazed space (1) such as a greenhouse or veranda, or of a non-glazed space such as a pergola, the system comprising:
a rotation shaft (12) configured to be arranged at the apex (3A) of the roof,
shade material (9, 10) which can be wound around the rotation shaft in a mounted position of the system and unwound onto the roof in a lowered position of the system, and
at least one slide means (16, 21) configured to be mounted on the roof so that the shade material slides on the slide means when being moved between the two positions,
**characterized in that** the slide means comprise a rounded piece (22) mounted on the lower edge (3B) of the roof (2).

2. The system according to claim 1, wherein the slide means (16, 21) is a cable tensed between the apex (3A) of the roof and the lower edge (3B) of the roof.

3. The system according to claim 2, wherein the cable is fixed perpendicular to the rotation shaft (12) and over the entire width of the roof.

4. The system according to any one of claims 2 or 3, further comprising support means (24) mounted between the apex (3A) of the roof and the lower edge (3B) of the roof to support the cable (16, 21).

5. The system according to any one of claims 1 to 4, wherein the rotation shaft (12) is coupled to a motor (25) which rotates it in both directions to raise and lower the shade material.

6. The system according to claim 5, wherein the motor (25) is controlled by a control system which controls at least one of the following characteristics:
- the time scheduling for lowering and raising of the material, and
- the percentage of coverage of the roof.

7. The system according to any one of claims 1 to 6, wherein the slide means are fixed above support means (4, 7) of the roof (2).

8. Method for installing a shading system according to any one of claims 1 to 7 on the roof (2) of a glazed space (1) such as a greenhouse or veranda, or of a non-glazed space such as a pergola, the method comprising the steps of:
- mounting the slide means (16, 21) on the roof,
- fixing the rotation shaft (12) on the apex (3A) of the roof, and
- fixing shade material (9, 10) to the rotation shaft.
